# DEMANDE DE BREVET EUROPEEN

(11) **EP 0 982 364 A1**
(43) Date de publication de la demande: **01.03.2000**
(21) Numéro de dépôt: 98402101.4
(22) Date de dépôt: 25.08.1998
(51) Int. Cl.: C08L 63/00, C09D 5/34, C08K 7/18, B62D 21/15

(54) **Mastic époxy renforcé aux fibres d'aramide contenant du "gel coat"**

(71) Demandeur: Bitar, Nicolas, 89150 Domats (FR)
(72) Inventeur: Bitar, Nicolas, 89150 Domats (FR)

(57) **Abrégé**

L'invention concerne un mastic à 2 composants, relativement léger, très résistant, lié à des micro- absorbeurs d'énergie (Microsphères à base de Silicate d'Aluminium) et à un support d'accrochage intégré, en l'occurrence le 〈〈 Gel- coat 〉〉 dont l'utilisation était jusqu'alors réservée aux couches de surface.

Composition pour un mélange prêt à l'emploi:

| Composant 〈〈 A 〉〉 (mastic) : | |
|---|---|
| - Résine époxy fluide | 28% |
| - Microbilles de Verre | 10% |
| - Microsphères au silicate d'Aluminium | 40% |
| - Gel-coat époxy | 6% |
| -Fibres de Verre | 5% |
| - Fibres d'Aramide | 3% |
| - Poudre thixotrope à base de Silice | 8% |

| Composant 〈〈 B 〉〉 (durcisseur): | |
|---|---|
| - Durcisseur liquide | 28% |
| - Microbilles de Verre | 12% |
| - Fibres de Verre | 4% |
| - Poudre thixotrope à base de Silice | 10% |
| - Microsphères au Silicate d'Aluminium | 46% |

Il s'agit d'un mastic Epoxy permettant de revêtir ou de combler des surfaces de carrosserie, surtout en cas d'épaisseurs importantes. Ce mastic peut être aussi utilisé dans d'autres domaines.

## Description

La présente invention concerne un mastic destiné aux éléments métalliques ou Composite de structure automobile, nautique, aéronautique; et autres supports.

Les mastics équivalents ne sont pas liés à des fibres d'Aramide, ni à du 〈〈 Gel-coat 〉〉 ; la rigidité, la légèreté et surtout l'adhérence aux divers matériaux et l'élasticité s'en ressent.

Le mastic inventé, par l'adjonction de 〈〈 Gel - coat 〉〉 en guise de support d'accrochage mélangé à celui-ci, permet de résoudre le manque d'adhérence à certains matériaux et résiste aux contraintes de dilatation, la résistance mécanique et le module d'élasticité se trouvant positivement modifiés.

La nouveauté réside dans le fait que le 〈〈 Gel - coat 〉〉, qui est à la base une pâte pigmentaire permettant un aspect de surface ou une coloration, a été mélangé à la résine et aux ingrédients permettant un mastic, pour conférer à celui-ci une meilleure résistance et un meilleur collage.

Le mastic est composé par le mélange désigné ci-contre. Le pourcentage indiqué est un pourcentage volumique et non un pourcentage de poids, la densité des ingrédients du mélange étant largement différente d'un produit à l'autre.

Composition pour un mélange prêt à l'emploi, en pourcentage volumique.

| Composant 〈〈 A 〉〉 (résine et additifs): | |
|---|---|
| - Résine époxy fluide | 28% |
| - Microbilles de Verre | 10% |
| - Microsphères au silicate d'Aluminium | 40% |
| - Gel-coat époxy | 6% |
| - Fibre de Verre | 5% |
| - Fibre d'Arimide | 3% |
| - Poudre adjuvante (agent thixotrope à base de Silice) | 8% |

| Composant 〈〈 B 〈〈 (durcisseur): | |
|---|---|
| - Durcisseur liquide | 28% |
| - Microbilles de Verre | 12% |
| - Fibres de Verre | 4% |
| - Poudre adjurante (agent thixotrope à base de Silice) | 10% |
| - Microsphères au Silicate d'Aluminium | 46% |

Le mastic inventé, de par sa forte teneur en Microsphères au Silicate d'Aluminium résiste bien à l'impact, ceux-ci étant des micro-absorbeurs d'énergie. L'adjonction de 〈〈 Gel-coat 〉〉 en guise de support d'accrochage intégré au mélange permet aussi une résistance aux contraintes de dilatation.

Le produit est obtenu par malaxage des ingrédients:
- Soit manuellement à l'aide d'une spatule
- Soit mécaniquement à l'aide de mélangeurs mus par un moteur électrique

Ce mastic s'étale uniformément, les fibres de Verre- Aramide, outre leur résistance à la rupture, conférant une parfaite homogénéité.

Le 〈〈 Gel- coat 〉〉 additionné au mélange en faible proportion renforce la résistance à la rupture et permet une forte résistance.

Ce mastic est particulièrement désigné pour les carrosseries automobiles. Il peut être utilisé dans d'autres domaines.

## Revendications

1. Mastic pour carrosserie à 2 composants à appliquer sur les surfaces en métal, composite, aluminium, bois et autres supports, caractérisé par le fait qu'il possède une forte teneur en Microsphéres au Silicate d'Aluminium et qu'il comporte en outre un support d'accrochage intégré, en l'occurrence du 〈〈 Gel-coat 〉〉 époxy, et des fibres d'Aramide.

2. Mastic époxy, selon la revendication 1, caractérisé par le mélange prêt à l'emploi désigné ci-contre, indiqué en pourcentage volumique, et non en pourcentage de masse, la densité des ingrédients du mélange étant largement différente d'un produit à l'autre:
| Composant 〈〈 A 〉〉 (mastic): | |
|---|---|
| - Résine époxy fluide | 28% |
| - Microbilles de Verre | 10% |
| - Microsphères au silicate d'Aluminium | 40% |
| - Gel-coat époxy | 6% |
| - Fibres de Verre | 5% |
| - Fibre d'Arimide | 3% |
| - Poudre thixotrope à base de Silice | 8% |
| Composant 〈〈 B 〉〉 (durcisseur): | |
|---|---|
| - Durcisseur liquide | 28% |
| - Microbilles de Verre | 12% |
| - Fibres de Verre | 4% |
| - Poudre thixotrope à base de Silice | 10% |
| - Microsphères au Silicate d'Aluminium | 46% |
